# EUROPÄISCHE PATENTSCHRIFT

(11) **EP 1 720 736 B1**
(45) Veröffentlichungstag und Bekanntmachung des Hinweises auf die Patenterteilung: **16.09.2009**
(21) Anmeldenummer: 04816343.0
(22) Anmeldetag: 17.12.2004
(51) Int. Cl.: B60R 19/48

(54) **VORRICHTUNG ZUR AUFPRALLSENSIERUNG**
DEVICE FOR COLLISION DETECTION
DISPOSITIF DE DETECTION D'IMPACT

(30) Priorität: 26.02.2004 DE 102004009301
(43) Veröffentlichungstag der Anmeldung: 15.11.2006
(73) Patentinhaber: ROBERT BOSCH GMBH, 70442 Stuttgart (DE)
(72) Erfinder: DUKART, Anton, 70839 Gerlingen (DE); GROEGER, Ulrike, 70499 Stuttgart (DE); MACK, Frank, 70376 Stuttgart (DE); STEINKOGLER, Sascha, 71229 Leonberg (DE)
(86) Internationale Anmeldenummer: PCT/EP2004/053554
(87) Internationale Veröffentlichungsnummer: WO 2005/085010

(56) Entgegenhaltungen:
- EP-A- 1 350 683
- WO-A-03/082639
- DE-U1- 29 708 926
- GB-A- 2 376 075
- US-A1- 2001 043 011
- US-A1- 2002 033 755
- US-A1- 2002 043 417
- US-A1- 2003 114 985
- US-B1- 6 561 301

## Beschreibung

### Stand der Technik

Die Erfindung geht aus von einer Vorrichtung zur Aufprallsensierung nach der Gattung des unabhängigen Patentanspruchs.

Aus DE 101 45 698 A1 ist bereits ein Sensorsystem für ein Fahrzeug bekannt, bei dem Beschleunigungssensoren an den Stoßfänger angeordnet werden.

Aus US 2003/0114985 A1 ist es bekannt, zwei bis drei Beschleunigungssensoren an der Stoßfängerinnenseite anzuordnen. Für die Ansteuerung von Personenschutzmitteln werden die Beschleunigungssignale der Beschleunigungssensoren einer Mittelwertbildung unterzogen. Aus US 2002/043417 A1 ist es bekannt, drei Beschleunigungssensoren an der Stoßstange anzuordnen. Für die Ansteuerung der Personenschutzmittel wird entweder eine Mittelwertbildung der Beschleunigungssignale der Beschleunigungssensoren oder ein Maximalwert der Beschleunigungssignale verwendet. Aus US 2002/0033755 A1 ist es auch bekannt, Beschleunigungssensoren an der Stoßstange zur Erkennung eines Fußgängeraufpralls zu verwenden. Für die Entscheidung, ob Personenschutzmittel angesteuert werden sollen, wird das Integral der ermittelten Beschleunigung verwendet.

Aus JP 2001-084545 A ist es bekannt, eine Motorhaube in Abhängigkeit von einem Beschleunigungssignal das durch eine Beschleunigungssensorik am Stoßfänger und in Abhängigkeit von der Fahrzeugeigengeschwindigkeit anzusteuern.

Aus EP 1350 683 A2 ist einen gattungsgemäßen Stoßfänger mit einem Kollisionsdetektionsgerät und einem passiven Sicherheitssystem bekannt, wobei die Kollision anhand einer Deformationsgeschwindigkeit und einer Beschleunigung festgestellt wird. Die detektierte Deformationsgeschwindigkeit korreliert mit der relativen Geschwindigkeit zwischen dem eigenen Fahrzeug und dem Aufprallobjekt. Die Deformationsgeschwindigkeit kann beispielsweise mit einem magnetischen Detektor erkannt werden.

### Vorteile der Erfindung

Die erfindungsgemäße Vorrichtung zur Aufprallsensierung zeigt, dass die Beschleunigungssensorik zwischen dem Querträger des Stossfängers und der Stoßfängerverkleidung angeordnet ist. Es ist eine feste Verbindung der Beschleunigungssensorik mit der Stossfängerverkleidung vorgesehen. Durch den Einbauort hinter der Stoßfängerverkleidung ist eine zuverlässige Erfassung von Beschleunigungssignalen möglich. Insbesondere zur Fußgängererkennung ist die erfindungsgemäße Vorrichtung besonders geeignet. Durch den Einbau der Beschleunigungssensorik im Stoßfänger wird ausgenutzt, dass die Signalstärke bei einem Fußgängerunfall dort deutlich zunimmt, da die Beschleunigungssensorik näher am Auftreffpunkt angeordnet ist, während die Signalstärke bei Schlechtwegstrecken durch eine Entkopplung vom Fahrwerk abnimmt. Durch den Einbauort wird demnach eine sichere und schnelle Erkennung von einem Aufprall mit einem Fußgänger erreicht.

Es ist von Vorteil, dass die Vorrichtung mit einem Steuergerät zur Ansteuerung von Personenschutzmitteln verbunden ist, so dass das Steuergerät in Abhängigkeit von Signalen der Beschleunigungssensorik und weiteren Sensoriken die Personenschutzmittel ansteuert. Es wird neben dem Signal der Beschleunigungssensorik auch ein Signal, das die Eigengeschwindigkeit oder die Relativgeschwindigkeit zum Aufprallobjekt repräsentiert, verwendet.

Die Beschleunigungssensorik ist zur Erfassung von Beschleunigungen in unterschiedlicher Richtungen konfiguriert.

Durch die in den abhängigen Ansprüchen aufgeführten Maßnahmen und Weiterbildungen sind vorteilhafte Verbesserungen der im unabhängigen Patentanspruch angegebenen Vorrichtung zur Aufprallsensierung möglich.

Besonders vorteilhaft ist, dass die Beschleunigungssensorik zwei Beschleunigungssensoren aufweist, die mit einem Versatz zur Fahrzeugmitte an der Stoßfängerverkleidung angebracht sind. Damit ist es vorteilhafter Weise möglich, einen Fußgängeraufprall sicher zu erkennen, der nicht mittig erfolgt ist. Zusätzlich kann die Position des Auftreffens bestimmt werden. Darüber hinaus ist es von Vorteil, dass am Stoßfänger noch wenigstens eine weitere Sensorik angeordnet ist. Dazu zählt beispielsweise ein Piezokabel mit integriertem kapazitiven Sensor, mit dem nicht-nur ein Aufprall sondern bereits eine Annäherung erkennbar ist. Durch die Kombination mit verschiedenen Sensoriken ist eine noch sicherere Erkennung von einem Fußgängeraufprall möglich. Auch die Unterscheidung zwischen einem Fußgänger und einem anderen Aufprallobjekt ist somit besonders einfach.

### Zeichnung

Ausführungsbeispiele der Erfindung sind in der Zeichnung dargestellt und werden in der nachfolgenden Beschreibung näher erläutert.

Es zeigen
- Figur 1: eine Aufsicht auf die erfindungsgemäße Vorrichtung und
- Figur 2: ein Blockschaltbild.

### Beschreibung

Auf Grund neuer Gesetzgebung innerhalb der Europäischen Union ist es für die Fahrzeughersteller notwendig geworden, Verletzungen eines Fußgängers bei einem Zusammenstoß mit einem Fahrzeug zu reduzieren. Dies kann einerseits dadurch erreicht werden, dass die Fahrzeugfront derart gestaltet wird, dass bei einem Aufprall mit einem Fußgänger dieser weniger verletzt wird. Es liegt damit also eine passive Lösung vor. Reicht die passive Lösung jedoch nicht aus oder wird als unzureichend verworfen, wird eine aktive Lösung verfolgt. Dabei soll mittels einer Sensorik der Aufprall eines Fußgängers erkannt werden und dann durch das Auslösen von geeigneten Personenschutzmitteln wie Außenairbags oder dem Anheben der Fronthaube der Schutz des Fußgängers erreicht werden.

Bei dieser aktiven Lösung können verschiedene Sensorprinzipien zur Anwendung kommen. Dazu zählt insbesondere der Beschleunigungssensor. Beschleunigungssensoren werden bereits in der Fahrzeugfront eingebaut, um als sogenannte Upfrontsensoren zu wirken. Dabei sind sie beispielsweise am Kühlerträger eingebaut. Dies hat jedoch für den Fußgängerschutz den Nachteil, dass bei Schlaglöchern, Bordsteinen und anderen Straßenunebenheiten ähnliche Signale und Amplituden erzeugt werden, wie sie bei einem Zusammenstoß mit einem Fußgänger entstehen. Eine Unterscheidung zwischen einem Fußgängerunfall und Straßenunebenheiten ist deshalb recht schwierig.

Erfindungsgemäß wird daher vorgeschlagen, Beschleunigungssensoren zwischen der Stoßfängerverkleidung und dem Querträger des Stoßfängers anzuordnen. Hier ist das Signal bei einem Fußgängeraufprall besonders hoch und die Entkopplung vom Fahrwerk ist derart, dass Schlechtwegstrecken und Schlaglöcher, ein nur geringes Signal erzeugen.

Mit Hilfe der erfindungsgemäßen Vorrichtung und einer geeigneten Auswertung der durch die Vorrichtung erzeugten Signale ist es möglich, zwischen einem Aufprall eines Fußgängers und dem Befahren einer Schlechtwegstrecke sowie anderen Fehlauslösefällen zu unterscheiden.

Die erfindungsgemäße Vorrichtung arbeitet prinzipiell mit einem Beschleunigungssensor, es ist aber vorteilhaft, zwei Beschleunigungssensoren mit einem Versatz rechts und links, beispielsweise 60 cm zur Fahrzeugmitte, anzubringen, um Fußgängeraufpralle, die nicht mittig erfolgen, sicher zu erkennen und Positionsaussagen zu treffen. Es ist natürlich möglich, noch weitere Beschleunigungssensoren anzuordnen, um eine noch genauere Auflösung zu erreichen.

Es ist darüber hinaus möglich, einen oder mehrere Beschleunigungssensoren hinter der Stossfängerverkleidung mit anderen Sensoren, wie beispielsweise ein Piezokabel oder Beschleunigungssensoren an anderen Einbauorten, wie einen Zentralsensor oder an Querträgern befestigt oder mit anderen Messrichtungen, zum Beispiel in Fahrzeugvertikalrichtung, zu kombinieren. Ebenfalls kann die Kenntnis der Eigengeschwindigkeit, zum Beispiel über den CAN-Bus, oder der Relativgeschwindigkeit, zum Beispiel über eine Umfeldsensorik, in eine Auslöseentscheidung für die Personenschutzmittel mitberücksichtigt werden.

Eine Nutzung der gemessenen Signale zur Upfrontsensierung ist auf unterschiedliche Weise möglich: Zum Beispiel können Informationen zum Barrierentyp (hart, weich, offset oder komplette Überdeckung), zur Relativgeschwindigkeit zwischen Auto und Objekt und der exakte Zeitpunkt des Auftreffens vom Airbagalgorithmus ausgenutzt werden.

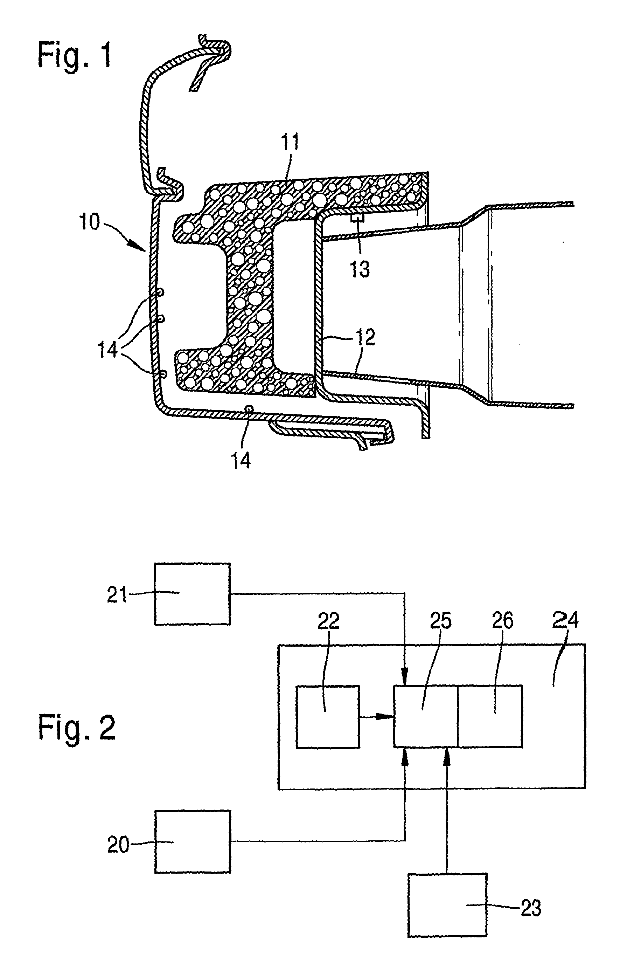

Figur 1 zeigt eine Draufsicht auf die erfindungsgemäße Vorrichtung. Eine Stoßfängerverkleidung 10 ist vor einem Schaumstoff 11 und dem Querträger 12 angeordnet. An der Stoßfängerverkleidung 10 sind die Beschleunigungssensoren 14 angebracht, und zwar zwischen der Stoßfängerverkleidung 10, dem Schaumstoff 11 bzw. dem Querträger 12. Zusätzlich können hier noch weitere Beschleunigungssensoren 13 angeordnet werden, wie beispielsweise hier am Querträger 12, wobei einer der Beschleunigungssensoren auch in Z-Richtung Beschleunigungen erfassen kann. Die Beschleunigungssensoren 14 erfassen Beschleunigungen in Fahrzeuglängsrichtung.

Figur 2 visualisiert die Funktionsweise der erfindungsgemäßen Vorrichtung. In ein Steuergerät 24 mit einer Datenauswertung 25 und einer Funktion zur Unterscheidung zwischen Fußgänger und Schlechtwegstrecke 26 gehen die Sensorsignale eines Beschleunigungssensors 20, der im Stoßfänger links angeordnet ist, eines zweiten Beschleunigungssensors 21, der im Stoßfänger rechts angeordnet ist, eines zentralen Beschleunigungssensors 22, der in der Airbag-ECU angeordnet ist und eine Geschwindigkeitsinformation 23 ein, um festzustellen, ob Personenschutzmittel, wie ein Außenairbag oder eine aktive Motorhaube, angesteuert werden sollen. Neben den hier dargestellten Sensorinputs sind auch weitere Sensorinputs möglich. Es ist auch möglich, weniger als die angegebenen Sensoren zu verwenden.

## Patentansprüche

1. Stoßfänger mit einer Stoßfängerverkleidung (10) und einer Vorrichtung zur Aufprallsensierung mit einer ersten Beschleunigungssensorik (14, 20, 21), einer zweiten Beschleunigungssensorik (13) und einem Steuergerät (24), wobei die Vorrichtung derart mit dem Steuergerät (24) zur Ansteuerung von Personenschutzmitteln verbunden ist, dass die Personenschutzmittel in Abhängigkeit von einem ersten Signal der ersten Beschleunigungssensorik (20, 21) und einem zweiten Signal (23) angesteuert werden, wobei das zweite Signal eine Eigengeschwindigkeit oder eine Relativgeschwindigkeit ist, die zweite Beschleunigungssensorik zentral im Steuergerät (24) angeordnet ist, wobei das Steuergerät (24) die Ansteuerung zusätzlich in Abhängigkeit von einem dritten Signal der zweiten Beschleunigungssensorik (13) durchführt und eine Unterscheidung zwischen einen Fußgänger- und einer Schlechtwegstrecke anhand des ersten, zweiten und dritten Signals durchführt, **dadurch gekennzeichnet, dass** die erste Beschleunigungssensorik (14), die am Stoßfänger (10, 11, 12) angeordnet ist, zwischen dem Stoßfänger (12) und der Stoßfängerverkleidung (10) angeordnet und zur Erfassung von Beschleunigungen unterschiedlicher Richtungen konfiguriert ist.

2. Vorrichtung nach Anspruch 1, **dadurch gekennzeichnet, dass** die erste Beschleunigungssensorik (14, 20, 21) zwei Beschleunigungssensoren aufweist, die jeweils einen Versatz zur Fahrzeugmitte aufweisen.

3. Vorrichtung nach Anspruch 1 oder 2, **dadurch gekennzeichnet, dass** am Stoßfänger (10 bis 12) noch wenigstens eine weitere Sensorik (13) angeordnet ist.

4. Vorrichtung nach Anspruch 3, **dadurch gekennzeichnet, dass** die wenigstens eine weitere Sensorik ein Piezokabel und/oder eine Umfeldsensorik aufweist.

5. Vorrichtung nach einem der vorherigen Ansprüche, **dadurch gekennzeichnet, dass** die Zweite Beschleunigungssensorik (13) zur Erfassung von Beschleunigung in Fahrzeugvertikalrichtung konfiguriert ist.

## Claims

1. Bumper having a bumper lining (10) and a device for sensing impacts with a first acceleration sensor system (14, 20, 21), a second acceleration sensor system (13) and a control device (24), wherein the device is connected to the control device (24) in order to actuate vehicle occupant protection means in such a way that the vehicle occupant protection means are actuated as a function of a first signal of the first acceleration sensor system (20, 21) and a second signal (23), wherein the second signal is a true speed or a relative speed, the second acceleration sensor system is arranged centrally in the control device (24), wherein the control device (24) also carries out the actuation as a function of a third signal of the second acceleration sensor system (13), and differentiates between a pedestrian path and a poor-quality underlying road surface on the basis of the first, second and third signals, **characterized in that** the first acceleration sensor system (14) which is arranged on the bumper (10, 11, 12) is arranged between the bumper (12) and the bumper lining (10), and is configured to sense accelerations from different directions.

2. Device according to Claim 1, **characterized in that** the first acceleration sensor system (14, 20, 21) has two acceleration sensors which each have an offset with respect to the centre of the vehicle.

3. Device according to Claim 1 or 2, **characterized in that** at least one further sensor system (13) is also arranged on the bumper (10 to 12).

4. Device according to Claim 3, **characterized in that** the at least one further sensor system has a piezo cable and/or a surroundings sensor system.

5. Device according to one of the preceding claims, **characterized in that** the second acceleration sensor system (13) is configured to sense acceleration in the vertical direction of the vehicle.

## Revendications

1. Pare-chocs doté d'un habillage (10) de pare-chocs et d'un dispositif de détection des collisions doté d'un premier ensemble (14, 20, 21) de sondes d'accélération, d'un deuxième ensemble (13) de sondes d'accélération et d'un appareil de commande (24),
le dispositif étant relié à l'appareil de commande (24) pour la commande de moyens de protection des personnes de telle sorte que les moyens de protection des personnes soient activés en fonction d'un premier signal du premier ensemble (20, 21) de sondes d'accélération et d'un deuxième signal (23),
le deuxième signal étant une vitesse propre ou une vitesse relative,
le deuxième ensemble de sondes d'accélération étant disposé centralement dans l'appareil de commande (24),
l'appareil de commande (24) exécutant la commande également en fonction d'un troisième signal du deuxième ensemble (13) de sondes d'accélération et effectuant une distinction entre un piéton et un parcours sur mauvaise chaussée à l'aide du premier, du deuxième et du troisième signal,
**caractérisé en ce que**
le premier ensemble (14) de sondes d'accélération disposé sur le pare-chocs (10, 11, 12) est disposé entre le pare-chocs (12) et l'habillage (10) de pare-chocs et
**en ce qu'**il est configuré pour détecter les accélérations dans différentes directions.

2. Dispositif selon la revendication 1, **caractérisé en ce que** le premier ensemble (14, 20, 21) de sondes d'accélération présente deux sondes d'accélération qui sont toutes deux décalées par rapport au milieu du véhicule.

3. Dispositif selon les revendications 1 ou 2, **caractérisé en ce qu'**encore au moins un autre ensemble (13) de sondes est disposé sur le pare-chocs (10 à 12).

4. Dispositif selon la revendication 3, **caractérisé en ce que** le ou les autres ensembles de sondes présentent un câble piézoélectrique et/ou un ensemble de sondes d'environnement.

5. Dispositif selon l'une des revendications précédentes, **caractérisé en ce que** le deuxième ensemble (13) de sondes d'accélération est configuré pour détecter des accélérations dans la direction verticale du véhicule.
